# EUROPÄISCHE PATENTSCHRIFT

(11) **EP 0 432 234 B1**
(45) Veröffentlichungstag und Bekanntmachung des Hinweises auf die Patenterteilung: **07.12.1994**
(21) Anmeldenummer: 90908155.6
(22) Anmeldetag: 06.06.1990
(51) Int. Cl.: B41F 15/24, B41F 15/42

(54) **VERFAHREN UND EINRICHTUNG ZUM BESCHICHTEN MIT SUBSTANZEN, Z.B. MIT KLEBSTOFF, ZUM WASCHEN UND/ODER ZUM TROCKNEN EINES Z.B. ENDLOSEN TRANSPORTBANDES O.DGL.**
PROCESS AND DEVICE FOR APPLYING A COATING OF SUBSTANCES, E.G. ADHESIVE, FOR WASHING AND/OR DRYING AN ENDLESS CONVEYOR BELT OR THE LIKE
PROCEDE ET DISPOSITIF POUR L'ENDUCTION AVEC DES SUBSTANCES, P.EX. AVEC DE LA COLLE, POUR LE LAVAGE ET/OU SECHAGE DE P.EX. UNE BANDE TRANSPORTEUSE SANS FIN OU SIMILAIRE

(30) Priorität: 13.06.1989 AT 1446/89
(43) Veröffentlichungstag der Anmeldung: 19.06.1991
(73) Patentinhaber: Zimmer, Johannes, A-9020 Klagenfurt (AT)
(72) Erfinder: Zimmer, Johannes, A-9020 Klagenfurt (AT)
(74) Vertreter: Puchberger, Rolf, Dipl. Ing.
(86) Internationale Anmeldenummer: AT9000055
(87) Internationale Veröffentlichungsnummer: WO9015716

(56) Entgegenhaltungen:
- EP-A- 0 311 728
- EP-A- 0 311 742
- DE-A- 2 217 168
- FR-A- 687 168
- FR-A- 1 565 278

## Beschreibung

Die Erfindung betrifft ein Verfahren und eine Einrichtung nach den Ansprüchen 1 und 4.

Die vorliegende Erfindung ist hauptsächlich auf ein neuartiges Behandlungsverfahren gerichtet, das für alle drei Funktionen - Kleben, Waschen und Trocknen des Transportbandes - geeignet ist, und, daraus abgeleitet, ein kombiniertes bzw. mehrstufig arbeitendes Hilfsverfahren, bei dem diese drei Arbeitsfunktionen in gleichartiger Verfahrenstechnik hintereinandergeschaltet bzw. nacheinander geordnet ablaufen.

Außerdem umfaßt diese Erfindung aber auch die konstruktiven Ausgestaltungen dieser verfahrensgemäßen Behandlungseinrichtungen.

Erfindungsgemäß wird jetzt das Verfahren gemäß Kennzeichen des Anspruches 1 vorgeschlagen.

Ein entsprechendes Verfahren und eine Einrichtung sind aus der EP-A 311 728 bekannt. Die Erfindung unterscheidet sich von dem Erfindungsgegenstand der genannten EP-Offenlegungsschrift 311 728 dadurch, daß mindestens eines der Arbeitsteile oder das Transportband druckelastisch ist und mindestens einer der Arbeitsteile und/oder das Transportband biegeelastiscn ist, wobei die Druckelastizität der Funktionseinheit auch dadurch bewirkt werden kann, daß das Transporthband im Bereich der Anpressung des Rakelelementes frei liegt, d.h., im gegenüberliegenden Bereich nicht auf einem Gegenelement aufliegt und daher durch Druck des Rakelelementes auf das Transportband in den dahinterliegenden freien Raum elastisch ausweichen kann.

Erfindungswesentlich ist, daß aufgrund der Biege- und Druckelastizität der Funktionseinheiten ein gleichmäßiges Anliegen der Arbeitselemente an der Oberfläche des Transportbandes gewährleistet ist und damit eine gleichmäßige Auftragung, Reinigung bzw. Trocknung. Im Gegensatz dazu zeigt die vorgehaltene EP-A 311 728 Arbeitselemente, die weder druck- noch biegeelastisch sind und als einzige Ausgleichsbewegung eine Schwenkbewegung ausführen können und somit nicht zu der gewünschten gleichmäßigen Arbeitsweise führen können.

Bemerkenswerter maschinenbautechnischer, wirtschaftlicher und anwendungstechnischer Vorteil dieser Erfindung ist die Nutzbarkeit einer im wesentlichen gleichartigen Konstruktion bzw. Bauform für unterschiedliche Zwecke, die jedoch wiederum einen verfahrenstechnischen, zweckgebundenen bzw. funktionskausalen Zusammenhang haben bzw. im Zusammenwirken eine verfahrestechnische Gesamtheit bilden.

Das endlose Transportband z.B. einer Textildruckmaschine wird üblicherweise bei jedem Unlauf zunächst mit eine Klebstoff dünn beschichtet, sodann wird der zu bedruckende Stoff darauf kaschiert und bedruckt, nach dem Bedrucken abgezogen und der Trocknung zugeführt; die danach mit Klebstoffresten, Textilfasern bzw. Flusen und zum Teil auch mit Druckfarben verunreinigte Druckdecke muß sodann gewaschen und nach dem Waschen auch wieder getrocknet werden, um sodann für neuerliches Aufkleben vorbereitet zu sein.

Dieser verfahrenstechnische Behandlungszyklus erfolgt in der Regel je einmal pro jedem Umlauf und bildet in seiner Gesamtheit wiederum einen Teil des gesamten Druckverfahrens, oder es könnte auch gesagt werden: er bildet einen Hilfsverfahrenszyklus zum Druckverfahren.

Nach dem bisherigen Stand der Technik sind für das Klebstoffauftragen, für das Waschen und für das Trocknen unterschiedliche Arbeitstechnologie und dementsprechend auch unterschiedliche Vorrichtungskonstruktionen in Gebrauch.

Für das Auftragen von Klebstoff sind Auftragungswalzen und auch Messerrakel bekannt; für das Waschen werden bisher vorwiegend Bürstvorrichtungen (Bürstleisten, Bürstwalzen, Tellerbürsten oder dgl.) in Kombination mit Aufbringen von Wasser oder gegebenenfalls Lösemitteln verwendet und für das Trocknen sind Trocknungsbürsten, Abquetschwalzen oder mechanisch angepreßte Rakelleisten in Verwendung, mitunter in Kombination mit nachgeschalteten Warmluftbehandlung oder dgl.

Die vorliegende Erfindung beschreibt zunächst ein neuartiges Behandlungsverfahren, das für alle drei Funktionen - Kleben, Waschen und Trocknen - des Transportbandes geeignet ist, und daraus abgeleitet, bei dem diese drei Arbeitsfunktionen in gleichartiger Verfahrenstechnik hintereinandergeschaltet bzw. nacheinander geordnet ablaufen.

Außerdem umfaßt diese Erfindung aber auch die konstruktiven Ansgestaltungen dieser verfahrensgemäßen Behandlungseinrichtungen.

Vorrichtungsmäßig beschreibend kann das Arbeitselement als ein magnetisch angepreßtes Rakelelement bezeichnet werden, wobei aber dieses Rakelelement in seiner Konstruktion von den bisher bekannten magnetisch angepreßten Rakelelementen durch seine erfindungsgemäße Kennzeichnung abweicht.

Beim erfindungsgemäßen Verfahren ist eine zeitliche Anfeinanderfolge gegeben, da während eines Umlaufes des endlosen Transportbandes, der etwa 20 bis 60 sek betragen kann, jeweils zuerst der Klebefilm aufgetragen, dann gewaschen und abgerakelt und zum Schluß wieder trokkengerakelt wird. Eine andere Möglichkeit besteht darin, den Klebefilm aufzutragen und die Ware aufzukleben, die in mehreren Umläufen bedruckt und sodann wieder abgezogen wird. Darauf wird in mehrmaligen Umläufen die Waschvorrichtung betätigt und ein nochmaliger Umlauf unter Verwenung der Trockenvorrichtung durchgeführt.

Die Erfindung wird anhand der Zeichnungen beispielsweise erklärt. Die Fig. 1 und 2 zeigen bekannte Ausführungsformen zum Auftragen von Materialien, die Fig. 3 und 4 sind zwei Ausführungsbeispiele der Erfindung und Fig. 5 zeigt schematisch einen Längsschnitt durch eine Rundschablonendruckmaschine.

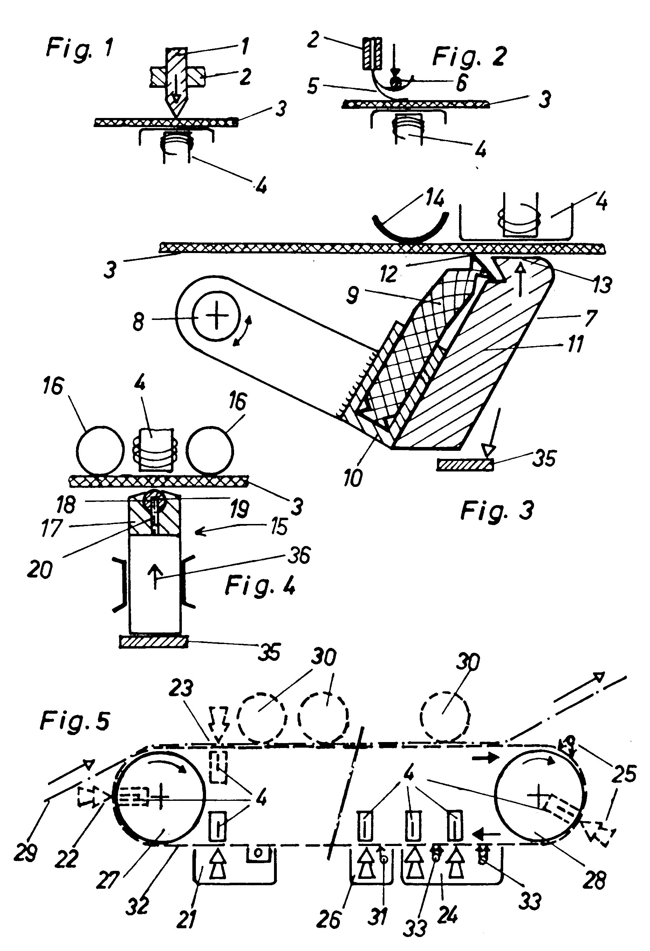

In Fig.1 ist eine bekannte Streichrakelvorrichtung dargestellt, bei der ein Rakelmesser 1 in einer Halterung 2 angeordnet ist und auf einem Transportband 3 ruht. Das Rakelmesser 1 wird durch einen Magnet 4 an dieses Transportband 3 angepreßt. Der Nachteil der in dieser Figur dargestellten Einrichtung liegt z.B. darin, daß das Rakelmesser 1 starr bzw. eigensteif ausgeführt ist, es muß aufwendig bearbeitet werden und es hat jedoch infolge der Eigensteifigkeit stets die Tendenz sich zu verbiegen, insbesondere bei Arbeitsbreiten von mehr als 1000 mm. Da auch der den Magnet 4 enthaltende Tisch bzw. eine Magnetwalze bei großen Arbeitsbreiten üblicherweise geringfügige Ungeradheiten aufweist und schließlich auch das Transportband 3 bei großen Breiten und Längen kaum ohne Dickenunterschiede herstellbar ist, ist die erforderliche Gleichmäßigkeit des Anliegens am Transportband in der Praxis kaum erzielbar. Derartige Einrichtungen haben deshalb keinen Eingang in der Praxis gefunden.

In Fig.2 ist eine weitere bekannte Ausführungsform dargestellt. Hier liegt am Transportband 3 eine elastische Klinge 5 an, die in einer Halterung 2 gelagert ist und die Anpressung der elastischen Klinge erfolgt hier über eine zusätzliche magnetisierbare Anpreßleiste. Diese Einrichtungen gemäß Fig. 2 sind zufolge der Längs- und Querelastizität der Klingen 5 und deren flächiges Anliegen für eine präzise, gleichmäßige, über die gesamte Arbeitsbreite wirkende Behandlung kaum geeignet. Es besteht bei ihnen vielmehr eher die Gefahr, daß sie die Oberfläche des Transportbandes 3 verschmieren und bei steilerer Einstellung ist auch die Gefahr des Kratzens und Schneidens gegeben.

In den Fig. 3 und 4 sind erfindungsgemäße Einrichtungen dargestellt, die jeweils an der unteren Seite eines Transportbandes 3 angeordnet sind. Bei beiden Ausführungsformen erfolgt ein gleichmäßiges Anliegen des Arbeitselementes an der Oberfläche des Transportbandes 3. Dieses gleichmäßige Anliegen und die Eignung für drei ganz unterschiedliche Arbeitsfunktionen kann selbstverständlich auf verschiedene Art erreicht werden.

Gemäß Fig. 3 ist eine magnetisierbare Leiste 7 z.B. an einem Drehgelenk 8 befestigt und die magnetisierbare Leiste 7 besteht aus einem Arbeitselement 9, das z.B. aus einer biege- und druckelastischen, profilierten, streifenförmig ausgebildeten Platte, vorzugsweise aus polymerem Kunststoff hergestellt ist, und aus einem Anpreßelement 11, das eine Halterung 10 zum Einstecken des Arbeitselementes 9 trägt. Durch die Halterung 10 wird das Arbeitselement 9 parallel zu dem Anpreßelement 11, das aus magnetisierbarem Material besteht, gehalten und die Arbeitskante 12 ragt über die dem Magnet 4 bzw. dem Transportband 3 zugewandte Fläche 13 des Anpreßelementes 11 geringfügig hinaus.

In Fig. 3 ist die erfindungsgemäße Einrichtung in Arbeitsfunktion dargestellt, wobei das Anpreßelement 11 und infolgedessen auch das Arbeitselement 9 in annähernd senkrechter Richtung zur Ebene des Transportbandes angezogen sind, jedoch so daß die Fläche 13 des Anpreßelementes 11 das Transportband nicht berührt, was eine Funktionsstörung bewirken würde. Die Arbeitskante 12 des Arbeitselementes 9 liegt jedoch infolge der beschriebenen, magnetisch bewirkten Anziehung an der Oberfläche des Transportbandes an, wobei ein den Magnet 4 einschließender oder mit diesem verbundener, balkenförmig ausgebildeter Gegenkörper 14 den erforderlichen Gegendruck für die entsprechende Arbeitsfunktion liefert.

Die durch den Gegendruckkörper 14 bzw. dessen Gleitfläche bzw. auch im Transportband etwaig vorhandenen, funktionsbeeinträchtigenden Ungleichmäßigkeiten werden durch die erfindungsgemäße Kombination der Biege- und Druckelastizität mit der magnetisch bewirkten Anpreßkraft ausgeglichen, so das eine fehlerfreie Auftragung von z.B. Klebstoff, bzw. fehlerfreie Reinigung bzw. Trocknung bewirkt werden kann.

Bei der Fig. 4 ist wiederum unterhalb des Transportbandes 3 eine zweiteilig ausgeführte, erfindungsgemäße Einrichtung 15 vorgesehen, die ein Arbeitselement 9 in Form eines Rundprofilstabes 19 in einer Ausnehmung 18 an seinem oberen Teil 17 trägt. Der Rundprofilstab 19 ist durch Verstiftung 20 gegen Verdrehung gesichert. Er muß nicht unbedingt kreisförmigen Querschnitt haben, sondern kann eine beliebige andere Form, auch abgerundet oder kantig sein. Der Rundprofilstab 19 bzw. die diesen tragende Leiste 17 wird durch den Magnet 4 angezogen und als Gegenflächen dienen hier Rohrkörper 16. Bei Fig. 4 wird die verfahrensgemäße Komponente der Druckelastizität durch das druck- und biegeelastische Transportband 3 und den in der mit Pfeil 36 bezeichneten Anpreßkraftrichtung gegenüber der Rakelanliegekante geschaffenen Biegebewegungsfreiraum bewirkt. Die obere, vorzugsweise aus magnetisierbarem Material bestehende Leiste 17 der erfindungsgemäßen Einrichtung 15 ist massiv, der untere, nicht schraffierte Teil ist über die Länge mehrmals eingeschnitten. Dadurch kann in vorteilhafter Weise die Biegeelastizität erhöht werden. Wie man der Fig. 3 entnehmen kann, ist hier die erfindungsgemäße Einrichtung in Arbeitsstellung, d.h., sie ist von einer Rastfläche 35 angehoben und durch die Magnetanpressung in Arbeitsposition. Bei der Fig. 4 befindet sich die erfindungsgemäße Einrichtung in Ruhestellung, d.h. außer Betrieb. Der Magnet 4 ist abgeschaltet und in diese Zustand liegt die Einrichtung auf der Rastfläche 35 auf und hat keinen Kontakt mit dem Transportband 3. Beim Einschalten des Magneten 4 wird dann die Einrichtung 15 in Richtung des Pfeiles 36 bewegt, bis der Kontakt mit dem Transportband 3 hergestellt ist.

Beiden Ausführungsformen gemäß Fig. 3 und 4 ist gemeinsam das die Stärke (Magnetkraft) und die Anordnung des Magnetfeldes ebenso die Stärke (magnetisierbare Masse) der Leiste bzw. des zweiten, den Anpreßdruck bewirkenden Arbeitsteiles und ebenso auch die in das erfindungsgemäße Verfahren integrierten Druck- und Biegeelastizitätskomponenten unter Beachtung aller bestehenden bzw. wirkenden, gegenseitigen Funktionsabhängigkeiten mit größtmöglicher Sorgfalt in der Materialauswahl und Dimensionierung der einzelnen Komponenten, aufeinander abgestimmt sind.

Es ist denkbar, daß in Fig. 3 statt der zwei Leisten, die eine mit Anpreß-, die andere mit Arbeitsfunktion, nur eine diese beiden Funktionen in sich vereinende Leiste verwendet wird, die gleich oder ähnlich der in Fig. 4 dargestellten und beschriebenen ist. Ferner ist es denkbar, das In der Ausführungsform nach Fig. 4, statt der Freistellung zwischen Transportband 3 und Magnetkernende bzw. der die Magnetkraft abgebenden Fläche, die Fläche bzw. die daran angrenzende Fläche als Anliegegleitfläche für das Transportband 3 ausgeführt sein kann; diesfalls müßte die erfindungsgemäße Einrichtung 15 und/oder das Transportband 3 selbstverständlich druck- und gegebenenfalls auch biegeelastisch ausgeführt sein.

Durch vorstehende Ausführungen wurde deutlich gemacht, daß diese beiden im Querschnitt unterschiedlich gestalteten Einrichtungen gemäß Fig. 3 und 4 in ihrer gedanklichen Grundlage und funktionalen Gesamtwirkung unterschiedliche Ausgestaltungen ein und desselben Erfindungsgedanken darstellen.

Es ist denkbar, daß sowohl die in Fig.3 als auch die in Fig. 4 dargestellte Ausführungsform, ebenso wie auch andere zeichnerisch nicht dargestellte mögliche Ausführungsformen, in der Wirkungsweise von ihrer räumlichen Anordnung unabhängig sind und somit auch in beliebig anderer räumlicher Anordnung funktionsfähig sind. Drei solcher möglichen, andersartigen räumlichen Anordnungen sind in Fig.5 strichliert gezeichnet dargestellt.

Die Fig.5 zeigt in schematischer Darstellung einen Längsschnitt durch eine Rundschablonendruckmaschine, die mit einem endlosen Transportband 32 ausgestattet ist, das über je eine Antriebs- 27 bzw. Umlenkwalze 28 geführt ist und in die je eine, die drei möglichen, verfahrensgemäßen Funktionen erstens des Auftragens eines fließfähigen, vorzugsweise viskosen Mediums, wie z.B. Klebstoff, zweitens des Reinigens und drittens des Trocknens des Transportbandes 32 ausführende, erfindungsgemäße Einrichtung engebaut ist. In dieser Figur sind schematisch Einrichtungen 21, 22 und 23 zum Auftragen bzw. Aufrakeln von z.B. Klebstoff, Einrichtungen 24 und 25 zum Reinigen bzw. Abrakeln der mit Reinigungsflüssigkeit aufgeweichten Materialien, z.B. Klebstoffrückstücke, Farbpastenrückstände, Textilfasern, Textilflusen der Staub, und die Einrichtung 26 zum Trocknen, d.h. als Trockenrakel, vorgesehen. In der Fig. 5 ist noch schematisch dargestellt, daß etwa bei der Antriebswalze 27 eine Warenbahn 29 auf das Transportband 32 aufgelegt wird, zusammen mit dem Transportband an Druckstationen 30 vorbeigeführt und schließlich etwa im Bereich der Umlenkwälze 28 wieder abgehoben wird.

Vor dem Trockenrakeln 26 ist ein Bespritzen oder Besprühen mit sauberer bzw. frischer Spülflüssigkeit (bei 31) vorgesehen, während für die Reinigung zur Gänze oder großteils Reinigungsflüssigkeit (bei 33) verwendet wird, die mittels Umwälzpumpe zirkuliert. Die Reinigungsvorrichtungen 24, 25 können entweder wahlweise oder, die Reinigungswirkang verstärkend, kombiniert eingesetzt werden.

Die erfindungsgemäße Einrichtung 21, 22, 23 zum Auftragen von z.B. Klebstoff kann hilfsweise bzw. zusätzlich, den Erfindungshauptgedanken Verfahrens- und vorrichtungsmäßig ergänzend, eine mittels magnetischer Anpreßkraft arbeitende Tauchwalzenantragungsvorrichtung an sich schon bekannter Art aufweisen, was nicht nur eine technisch wertvolle Erweiterung des bisher beschriebenen Erfindungsinhaltes, sondern auch in wirtschaftlicher Hinsicht vorteilhaft ist, weil hiefür In der Hauptsache, für die Erzeugung der magnetischen Anpreßkraft, das gleiche Bauteil verwendet werden kann wie für die anderen drei Arbeitsfunktionen.

Verfahrens- und auch vorrichtungstechnisch neu an dieser Einrichtung ist das Antragen eines Substanzüberschusses, da die bisher bekannten Auftragungseinrichtungen dieser Art nur für die Funktion des dosierend erfolgenden Auftragens, ohne Auftragung und anschließend daran erfolgendes Abrakeln mit dosierender Wirkung, so wie dies erfindungsgemäß erfolgt, geeignet sind.

In der Variante 23 der Auftragungsfunktion mit Anordnung der erfindungsgemäßen Einrichtung am oberen TEil des Transportbandes, kann die aufzutragende Substanz, z.B. Klebstoff, von Hand aus oder durch mechanische Hilfsmittel der erfindungsgemäßen Einrichtung vorgegeben werden. Diesfalls wird die Warenbahn selbstverständlich erst im Bereich nach der Kelbstoffauftragung dem Transportband zugeführt und daran angepreßt, was in Fig. 5 nicht dargestellt ist.

Nicht dargestellt ist ferner die Möglichkeit, die erfindungsgemäße Verfahrenstechnik in der Anwendungsfunktion zum Auftragen einer vorzugsweise, viskosen, fließfähigen Substanz, wie z.B. Klebstoff, nicht auf die bisher dargestellte Anwendungsform des Beschichtens eines endlosen Transportbandes zu beschränken, sondern ebenso auch auf andere Beschichtungsfunktionen, insbesondere Auftragen von Schichten auf bahnförmiges Material aller Art, unterschiedlicher Stärke und unterschiedlicher Oberflächenbeschaffenheit, anzuwenden.

Anstatt Verwendung balkenförmiger Querträger, in die Magnetkraft erzeugende Einrichtungen eingesetzt sind, ist es auch denbar, Magnetkraft abgebende Walzen zu verwenden oder umgekehrrt, magnetisierbare Gegendruckwalzen, wobei diesfalls die die Magnetkraft erzeugende Teile an der Seite der Warenbahn bzw. des Transportbandes angeordnet sind, an der das Auftragen bzw. Beschichten bzw. Abrakeln erfolgt.

Nochmals zurückkommend auf die in Fig.5 dargestellten Einrichtungen 21 mit der Doppelfunktion des Auftragens und des dosierenden Abrakelns sei noch als weiterer ergänzender Erfindungsgedanken hinzugefügt, daß es denkbar ist, beide Arbeitselemente in nur einem Magnetfeld anzuordnen. Dies ist insbesondere dann sinnvoll, wenn eine Magnetkraft abstrahlende Walze Anwendung findet und beide Arbeitsfunktionen nahe nebeneinanderliegend im Bereich des unteren Scheitels dieser Walze ausgeführt werden sollen.

Qualitative Verbesserungen der erfindungsgemäßen Verfahrenstechnik bzw. Einrichtung sind erzielbar, wenn die Einrichtung zusätzlich mit einer Hilfseinrichtung ausgestattet wird, die eine vorzugsweise periodisch ablaufende Hin- und Herbewegung in Richtung quer zur Laufrichtung des Transportbandes bzw. der Warenbahn bewerkstelligt.

## Patentansprüche

1. Verfahren zum Beschichten mit Substanzen, zum Waschen und/oder Trocknen eines Transportbandes (3, 32) oder einer Warenbahn (29), wobei für den Auftragungs-, Reinigungs- und/oder Trocknungsvorgang je eine Funktionseinheit eingesetzt wird, die aus mindestens zwei Arbeitsteilen (4, 9, 11, 15, 16), einem streichend, gleitend, schabend oder quetschend arbeitenden Rakelelement (12, 19) und einem Gegendruckelement (4, 16), die an gegenüberliegenden Flächen des Transportbandes (3)/der Warenbahn (29) angeordnet sind und von denen eines eine Magnetvorrichtung und das andere magnetisierbares Material enthält, besteht, dadurch gekennzeichnet, das mindestens eines der Arbeitsteile (4, 9, 11, 15, 16) und/oder das Transportband (3)/die Warenbahn (29) druckelastisch ist oder das Transportband (3)/die Warenbahn (29) außerhalb jenes Bereiches an einem oder mehreren Gegendruckelementen (16) aufliegt, der da Berührungsbereich des Rakelelements (19) mit dem Transportband (3)/der Warenbahn (29) gegenüberliegt und somit der Funktionseinheit Druckelastizität verleiht und daß mindestens eines der Arbeitsteile (4, 9, 11, 15, 16) und/oder das Transportband(3)/die Warenbahn (29) biegeelastisch ist und das Rakelelement (12, 19) von der Magnetvorrichtung gleichmäßig an das Transportband (3)/die Warenbahn (29) gepreßt wird.

2. Verfahren nach Anspruch 1, dadurch gekennzeichnet, das das Rakelelement (12, 19) quer zur Laufrichtung des Transportbandes (3)/ der Warenbahn (29) hin und her bewegt wird.

3. Verfahren nach Anspruch 1, dadurch gekennzeichnet, das bei Substanzauftragung durch die Funktionseinheit, derselben eine Rakeleinrichtung nachgeordnet ist und das die Funktionseinheit und die Rakeleinrichtung in einem Magnetfeld liegend das Transportband bearbeiten.

4. Einrichtung zum Beschichten mit Substanzen, Waschen und/oder Trocknen eines Transportbandes (3)/einer Warenbahn (29), wobei für den Auftragungs-, Reinigungs- und/oder Trocknungsvorgang je eine Funktionseinheit eingesetzt wird, die aus mindestens zwei an gegenüberliegenden Flächen des Transportbandes (3)/der Warenbahn (29) angeordneten Arbeitsteilen (4, 9, 11, 15, 16), einem beweglichen Rakelelement (12,19) mit einem Arbeitselement (9,19) und einem damit verbundenum Anpreßelement (11,17), in dem magnetisierbares Material vorgesehen ist, und einem Gegendruckelement (4,16), das eine Magnetvorrichtung enthält, beseht, dadurch gekennzeichnet, das mindestens eines der Arbeitsteile (4, 9, 11, 15, 16) und/oder das Transportband (3) / die Warenbahn (29) druckelastisch ist oder das Transportband (3)/die Warenbahn (29) außerhalb jenes Bereiches an einem oder mehreren Gegendruckelementen (16) aufliegt, der dem Berührungsbereich des Rakelelements (19) mit dem Transportband (3)/der Warenbahn (29) gegenüberleigt und somit der Funktionseinheit Druckelastizität verleiht und daß mindestens eines der Arbeitsteile (4, 9, 11, 15, 16) und/oder das Transportband (3)/die Warenbahn (29) biegeelastisch ist und das Rakelelement (12, 19) von der Magnetvorrichtung gleichmäßig an das Transportband (3)/die Warenbahn (29) gepreßt wird.

5. Einrichtung nach Anspruch 4, dadurch gekennzeichnet, daß die Stärke der Magnetkraft und die Lage des Magnetfeldes sowie die Größe der magnetisierbaren Masse im zweiten Arbeitsteil, sowie die Biege- und Druckelastizität des Arbeitselementes (9, 19) unter Beachtung der bestehenden bzw. wirkenden gegenseitigen Funktionsabhängigkeiten wählbar sind.

6. Einrichtung nach Anspruch 4 oder 5, dadurch gekennzeichnet, daß das Arbeitselement (9, 19) aus einer biege- und druckelastischen, profilierten, streifenförmig ausgebildeten Platte, vorzugsweise aus polymerem Kunststoff, besteht.

7. Einrichtung nach einem der Ansprüche 4 bis 6, dadurch gekennzeichnet, daß das Anpreßelement (11) mit dem magnetisierbaren Material eine Halterung (10) für das Einstecken des Arbeitselementes (9, 19) aufweist.

8. Einrichtung nach einem der Ansprüche 4 bis 7, dadurch gekennzeichnet, daß das Arbeitselement (9) eine Arbeitskante (12) aufweist, die die dem Magnetfeld bzw. Transportband zugewendete Fläche des Anpreßelementes (11) geringfügig überragt und im Betriebszustand am Transportband (3) anliegt.

9. Einrichtung nach einem der Ansprüche 4 bis 8, dadurch gekennzeichnet, daß das Arbeitselement als Rundprofilstab (19) ausgebildet ist.

10. Einrichtung nach Anspruch 9, dadurch gekennzeichnet, daß der Rundprofilstab (19) einen kreisförmigen Querschnitt hat und durch Verstiftung (20) gegen Verdrehung gesichert ist.

11. Einrichtung nach einem der Ansprüche 4 bis 10, dadurch gekennzeichnet, daß eine Einrichtung zur Bewegung des Arbeitselementes quer zur Bewegungsrichtung des Transportbandes (3) vorgesehen ist.

12. Einrichtung nach einem der Ansprüche 4 bis 11, dadurch gekennzeichnet, daß das Arbeitselement (9, 19) austauschbar ist.

13. Einrichtung nach Anspruch 4, dadurch gekennzeichnet, daß bei Substanzauftragung durch die Funktionseinheit (21) die aufzutragende Substanz zuerst im Überschuß aufgetragen und unmittelbar daraufhin dosierend abgerakelt wird.

14. Einrichtung nach Anspruch 13, dadurch gekennzeichnet, daß die Elemente der Funktionseinheit (21) in einem Magnetfeld angeordnet sind.

## Claims

1. Process for applying a coating of substances, for washing and/or drying a conveyor belt (3,32) or an endless web of fabric (29), where for the application, cleaning and/or drying process in each case one functional unit is employed, which consists of at least two working parts (4, 9, 11, 15, 16), a doctor blade element (12, 19) with a stroking, sliding, rubbing or squeezing operation, and a counterpressure element (4, 16), which are located on opposing surfaces of the conveyor belt (3)/the endless web of fabric (29), and of which one contains a magnet device and the other contains magnetizable material, characterised by the fact that at least one of the working parts (4, 9, 11, 15, 16) and/or the conveyor belt (3)/the endless web of fabric (29) is compression-elastic, or the conveyor belt (3)/the endless web of fabric (29) rests against one or several counterpressure elements (16) outside that area which lies opposite the contact area of the doctor blade element (19) with, the conveyor belt (3)/the endless web of fabric (29), and thus makes the functional unit elastic under pressure; and that at least one of the working parts (4, 9, 11, 15, 16) and/or the conveyor belt (3)/the endless web of fabric (29) is flectionally elastic and the doctor blade element (12, 19) is evenly pressed against the conveyor belt (3)/the endless web of fabric (29) by the magnet device.

2. Process in accordance with claim 1, characterised by the fact that the doctor blade element (12, 19) is moved to and fro transverse to the direction of travel of the conveyor belt (3)/the endless web of fabric (29).

3. Process in accordance with claim 1, characterised by the fact that when the substance is applied by the functional unit, the latter has a doctor blade element located downstream of it and that the functional unit and the doctor blade device work on the conveyor belt, within a magnetic field.

4. Device for applying a coating of substances, for washing and/or drying a conveyor belt (3)/an endless web of fabric (29), where for the application, cleaning and/or drying process in each case one functional unit is employed, which consists of at least two working parts (4, 9, 11, 15, 16) located on opposing surfaces of the conveyor belt (3)/the endless web of fabric (29), a movable doctor blade element (12, 19) with a working element (9, 19) and a pressing element (11, 17) connected with it, in which magnetizable material is provided, and a counterpressure element (4, 16) which contains a magnet device, characterised by the fact that at least one of the working parts (4, 9, 11, 15, 16) and/or the conveyor belt (3)/the endless web of fabric (29) is compression-elastic, or the conveyor belt (3)/the endless web of fabric (29) rests against one or several counterpressure elements (16) outside that area which lies opposite the contact area of the doctor blade element (19) with the conveyor belt (3)/the endless web of fabric (29), and thus makes the functional unit elastic under pressure; and that at least one of the working parts (4, 9, 11, 15, 16) and/or the conveyor belt (3)/the endless web of fabric (29) is flectionally elastic and the doctor blade element (12, 19) is evenly pressed against the conveyor belt (3)/the endless web of fabric (29) by the magnet device.

5. Device in accordance with claim 4, characterised by the fact that the strength of the magnetic force and the position of the magnetic field, and the size of the magnetizable mass in the second working part, and the flectional and compression elasticity of the working element (9, 19) can be selected whilst taking into account the existing or active mutual functional interactions.

6. Device in accordance with claim 4 or 5, characterised by the fact that the working element (9, 19) consists of a flectionally and compression-elastic, profiled plate formed of strips, preferably of synthetic polymer.

7. Device in accordance with one of the claims 4 to 6, characterised by the fact that the pressing element (11) with the magnetizable material has a holder (10) for inserting the working element (9, 19).

8. Device in accordance with one of the claims 4 to 7, characterised by the fact that the working element (9) has a working edge (12) which slightly projects beyond the surface of the pressing element (11) facing the magnetic field or conveyor belt, and in its operational state rests against the conveyor belt (3).

9. Device in accordance with one of the claims 4 to 8, characterized by the fact that the working element is in the form of a round profile rod (19).

10. Device in accordance with claim 9, characterised by the fact that the round profile rod (19) has a circular cross-section and is secured against torsion by means of pinning (20).

11. Device in accordance with one of the claims 4 to 10, characterized by the fact that a device is provided for moving the working elements transverse to the direction of movement of the conveyor belt (3).

12. Device in accordance with one of the claims 4 to 11, characterized by the fact that the working element (9, 19) can be exchanged.

13. Device in accordance with claim 4, characterised by the fact that when the substance is applied by the functional unit (21), the substance to be applied is first applied in excess and immediately afterwards bladed off to a particular dose.

14. Device in accordance with claim 13, characterized by the fact that the elements of the functional unit (21) are located in a magnetic field.

## Revendications

1. Procédé pour l'enduction avec des substances, pour le lavage et/ou séchage d'une bande de transport (3, 32) ou d'une nappe de tissu (29) dans lequel on utilise pour les opérations d'application, de nettoyage et/ou de séchage respectivement une unité fonctionnelle constituée d'au moins deux parties opérationnelles (4, 9, 11, 15, 16), un élément formant racle (12, 19) fonctionnant pour étaler, glisser, racler ou écraser et un élément de contre-pression (4, 16) qui sont disposés à des faces opposées de la bande de transport (3)/de la nappe de tissu (29) et dont l'un contient le dispositif à aimant et l'autre le matériau pouvant être aimanté, caractérisé en ce qu'au moins l'une des parties opérationnelles (4, 9, 11, 15, 16) et/ou la bande de transport (3)/la nappe de tissu (29) est élastique sous pression ou que la bande de transport (3)/la nappe de tissu (29) repose à l'extérieur de la zone sur un ou plusieurs éléments de contre-pression (16) qui est opposée à la zone de contact de l'élément formant racle (19) avec la bande de transport (3)/la nappe de tissu (29) et donne ainsi à l'unité fonctionnelle une élasticité sous pression, et en ce qu'au moins l'une des parties opérationnelles (4, 9, 11, 15, 16) et/ou la bande de transport (3)/la nappe de tissu (29) est élastique en flexion et en ce que l'élément formant racle (12, 19) est pressé par le dispositif à aimant uniformément contre la bande de transport (3)/la nappe de tissu (29).

2. Procédé selon la revendication 1, caractérisé en ce que l'élément formant racle (12, 19) est déplacé suivant un mouvement de va-et-vient transversalement à la direction d'avancement de la bande de transport (3)/la nappe de tissu.

3. Procédé selon la revendication 1, caractérisé en ce que lors de l'application d'une substance par l'unité fonctionnelle, un dispositif formant racle est placé à la suite de celle-ci, et en ce que l'unité fonctionnelle et le dispositif formant racle traitent la bande de transport tout en se situant dans un champ magnétique.

4. Dispositif pour l'enduction avec des substances, le lavage et/ou le séchage d'une bande de transport (3)/une nappe de tissu (29), dans lequel on utilise pour les opérations d'application, de nettoyage et/ou de séchage, respectivement une unité fonctionnelle qui est constituée d'au moins deux parties opérationnelles (4, 9, 11, 15, 16) disposées à des faces opposées de la bande de transport (3)/la nappe de tissu (29), d'un élément mobile formant racle (12, 19) avec un élément opérationnel (9, 19) et un élément d'application (11, 17) relié à celui-ci dans lequel est prévu un matériau pouvant être aimanté, et d'un élément de contre-pression (4, 16) qui contient un dispositif à aimant, caractérisé en ce qu'au moins l'une des parties opérationnelles (4, 9, 11, 15, 16) et/ou la bande de transport (3)/la nappe de tissu (29) est élastique sous pression ou que la bande de transport (3)/la nappe de tissu (29) repose à l'extérieur de la zone sur un ou plusieurs éléments de contre-pression (16) qui est opposée à la zone de contact de l'élément formant racle (19) avec la bande de transport (3)/la nappe de tissu (29) et donne ainsi à l'unité fonctionnelle une élasticité sous pression, et en ce qu'au moins l'une des parties opérationnelles (4, 9, 11, 15, 16) et/ou la bande de transport (3)/la nappe de tissu (29) est élastique en flexion et que l'élément formant racle (12, 19) est pressé par le dispositif à aimant uniformément contre la bande de transport (3)/la nappe de tissu (29) .

5. Dispositif selon la revendication 4, caractérisé en ce que l'intensité de la force magnétique et la position du champ magnétique ainsi que la grandeur de la masse pouvant être aimantée peuvent être choisies dans la deuxième partie opérationnelle, ainsi que l'élasticité en flexion et sous pression de l'élément opérationnel (9, 19) en tenant compte des dépendances fonctionnelles mutuelles existantes ou actives.

6. Dispositif selon la revendication 4 ou 5, caractérisé en ce que l'élément opérationnel (9, 19) est constitué d'une plaque élastique en flexion et sous pression, profilé, réalisé en forme de bande, de préférence en polymère

7. Dispositif selon l'une des revendications 4 à 6, caractérisé en ce que l'élément d'application (11) comprenant le matériau pouvant être aimanté comprend un logement (10) pour la mise en place de l'élément de travail (9,19).

8. Dispositif selon l'une des revendications 4 à 7, caractérisé en ce que l'élément opérationnel (9) présente une arête opérationnelle (12) qui fait légèrement saillie sur la face orientée vers le champ magnétique ou la bande de transport de l'élément d'application (11) et qui s'applique à l'état fonctionnel à la bande de transport (3).

9. Dispositif selon l'une des revendications 4 à 8, caractérisé en ce que l'élément de travail est réalisé sous forme de tige profilée ronde (19).

10. Dispositif selon la revendication 9, caractérisé en ce que la tige profilée ronde (19) a une section transversale circulaire et est assurée par des goupilles (20) contre une rotation.

11. Dispositif selon l'une des revendications 4 à 10, caractérisé en ce qu'il est prévu un dispositif pour déplacer l'élément opérationnel transversalement au mouvement d'avance de la bande de transport (3).

12. Dispositif selon l'une des revendications 4 à 11, caractérisé en ce que l'élément opérationnel (9, 19) est échangeable.

13. Dispositif selon la revendication 4, caractérisé en ce que dans le cas de l'application de la substance par l'unité fonctionnelle (21), la substance à appliquer est d'abord appliquée avec un excédent et est raclée directement ensuite selon un dosage.

14. Dispositif selon la revendication 13, caractérisé en ce que les éléments de l'unité fonctionnelle (21) sont disposés dans un champ magnétique.
